# EUROPÄISCHE PATENTSCHRIFT

(11) **EP 0 650 763 B1**
(45) Veröffentlichungstag und Bekanntmachung des Hinweises auf die Patenterteilung: **02.12.1998**
(21) Anmeldenummer: 94115737.2
(22) Anmeldetag: 06.10.1994
(51) Int. Cl.: B02C 23/08, B02C 23/02

(54) **Umlaufmahlanlage**
Closed circuit grinding plant
Installation de broyage en circuit

(30) Priorität: 30.10.1993 DE 4337215
(43) Veröffentlichungstag der Anmeldung: 03.05.1995
(73) Patentinhaber: DEUTZ Aktiengesellschaft, 51063 Köln (DE)
(72) Erfinder: Süssegger, Albert, D-51429 Bergisch Gladbach (DE); Strasser, Siegfried, D-53804 Much (DE)

(56) Entgegenhaltungen:
- EP-A- 0 447 669
- EP-B- 0 084 383
- EP-B- 0 220 681
- DE-C- 4 016 262
- US-A- 4 976 469

## Beschreibung

Die Erfindung betrifft eine Umlaufmahlanlage zur Mahlung von Frischgut, mit einer Hochdruck-Walzenpresse mit Gutbettzerkleinerung des Aufgabegutes und mit einem Sichter, dessen Grobgutaustrugsöffnung mit der Gutaufgabe der Walzenpresse in Verbindung steht.

Man hat in den letzten Jahren erhebliche Anstrengungen unternommen, Rohrmühlen bzw. Kugelmühlen durch andere Mahlprozesse möglichst vollständig zu ersetzen. So ist ein Verfahren zur Zerkleinerung bzw. Mahlung spröden Mahlgutes bekannt (EP-B-0 084 383, Fig. 4 und 6), bei dem das Mahlgut im Walzenspalt einer Hochdruck-Walzenpresse unter hohem Druck gepreßt wird, was teils zur Partikelzerstörung, teils zur Erzeugung von Anrissen im Partikelinneren führt und sich sichtbar in der Bildung von Agglomeraten (sogenannten Schülpen) äußert. Weil die einzelnen Partikel des Mahlgutes im Bereich des engsten Walzenspaltes der Hochdruck-Walzenpresse in einem Gutbett, d. h. in einer zwischen zwei Flächen zusammengedrückten Materialschüttung gegenseitig zerquetscht werden, spricht man hierbei von der sogenannten Gutbettzerkleinerung. Die aus der Hochdruck-Walzenpresse kommenden Gutagglomerate werden dann desagglomeriert bzw. aufgelöst und anschließend einem Sichter aufgegeben, dessen Grieße vollständig zur Hochdruck-Walzenpresse rezirkuliert werden. Infolge der Anwendung des hohen Preßdruckes in der Hochdruck-Walzenpresse und der Zerstörung des Korngefüges enthalten die aus der Walzenpresse kommenden Gutagglomerate bereits fertig feines Gut, das aus dem Sichter der Kreislaufmahlanlage zusammen mit der Sichtluft abgezogen wird.

Bei der bekannten Umlaufmahlanlage ist vorgeschlagen worden, die aus der Hochdruck-Walzenpresse kommenden Schülpen nicht wie sonst üblich in einer nachgeschalteten Rohrmühle, sondern durch ein Klassiersieb zu desagglomerieren, bevor das Schülpenmaterial dem Sichter aufgegeben wird. Geht es z. B. um die Mahlung von Zementklinker zu Zement, so sind die von der Zementindustrie üblicherweise verlangten Durchsatzleistungen mit Klassiersieben allerdings nicht mehr zu bewältigen. Außerdem würden Siebgewebe von Klassiersieben, eingesetzt für diesen Zweck, schnell verschleißen, denn die von der Hochdruck-Walzenpresse gepreßten Gutmaterialschülpen sind aus Gutkörnern mit vergleichsweise scharfkantiger Kornoberfläche zusammengesetzt, welche den Verschleiß eines Klassiersiebes sehr begünstigen. Dieses Verschleißproblem, das mit zunehmendem Preßdruck der Walzenpresse ansteigt, gilt auch für den Sichter, besonders wenn dieser ein dynamischer Sichter mit wenigstens einem rotierenden Stabkorb ist, dessen stabförmigen Turboelemente aufgrund der Prallbeanspruchung insbesondere durch die groben scharfkantigen Sichtgutkörner einem hohen Verschleiß unterliegen.

Bei einer anderen bekannten Mahlanlage (DE-C-40 16 262) wird das Frischgut zunächst im Walzenspalt einer Gutbett-Walzenmühle zu Schülpen gepreßt, die dann von einer Überlaufrutsche mit zwei Ausgängen in zwei Teilströme geteilt werden, von denen der eine Teilstrom zur Gutaufgabe der Walzenmühle rezirkuliert und der andere Teilstrom zu einer Kugelmühle weitertransportiert werden. Ein Sichter, der die obengenannten Verschleißprobleme bereiten würde, ist in diese bekannte Mahlanlage nicht eingeschaltet.

In der Praxis hatte man immer dann, wenn man zum Zwecke der Energieersparnis eine Gutbettzerkleinerungs-Hochdruck-Walzenpresse eingesetzt hat, auf diese das Frischgut (ggf. zusammen mit Sichtergrießen) aufgegeben und die Walzenpresse mit möglichst hohem Preßdruck betrieben. Die Verschleißprobleme für die Walzenpresse, den Desagglomerator und den Sichter sind dabei erheblich. Andererseits ist es zur Mahlung und Trocknung (Mahltrocknung) von feuchtem spröden Mahlgut wie z. B. feuchtes Ausgangsmaterial für Zementrohmehl mit Einsatz der Hochdruck-Walzenpresse bekannt (EP-B-0 220 681), das frische feuchte Mahlgut nicht der Walzenpresse, sondern zuerst einer Prallhammermühle aufzugeben, in der das Frischgut zerkleinert, vorgetrocknet und gleichzeitig die aus der Hochdruck-Walzenpresse kommenden Gutmaterialschülpen desagglomeriert werden, wobei dem Aufgabeschacht der Walzenpresse nur die Grieße des Sichters der Umlaufmahlanlage zugeführt werden. Diese bekannte Umlaufmahlanlage arbeitet also mit zwei Mühlen, sie ist daher von den Investitionskosten und Betriebskosten her relativ aufwendig und sie ist von ihrer Betriebsweise her für den Einsatz feuchten Frischgutes zurechtgeschnitten. Auch bei dieser bekannten Umlaufmahlanlage wird eine möglichst hohe Pressung des Gutes im Spalt der Walzenpresse angestrebt, was den Einsatz eines eigene Investitionskosten und Betriebskosten verursachenden Desagglomerators zur Desagglomerierung der Pressenschülpen zur Folge hat.

Der Erfindung liegt die Aufgabe zugrunde, eine einfach gebaute und insgesamt durch einen niedrigen spezifischen Energiebedarf gekennzeichnete Umlaufmahlanlage mit Gutbettzerkleinerungs-Hochdruck-Walzenpresse und mit Sichter zu schaffen, wobei die Umlaufmahlanlage ohne eigenen separat angetriebenen Desagglomerator zur Desagglomerierung der Walzenpressen-Schülpen auskommen soll.

Diese Aufgabe wird gemäß der Erfindung mit den Maßnahmen des Kennzeichnungsteils des Anspruchs 1 gelöst. Vorteilhafte Weiterbildungen sind in den Unteransprüchen angegeben.

Charakteristisch für die erfindungsgemäße Umlaufmahlanlage ist zuerst einmal der in den Walzenpressen-Mahlkreislauf eingeschaltete Sichter, der ein statischer Sichter ist mit zwei vom schachtförmigen Sichtergehäuse umschlossenen und zwischen sich eine Sichtzone bildenden sowie von der Sichtluft im Querstrom durchströmten Sichtzonenbegrenzungswänden, die schräg nach unten in Richtung zur Austragsöffnung für die ausgesichtete Grobgutfraktion geneigte kaskadenartig angeordnete Leitbleche aufweisen, wobei die beiden Leitblechwände und damit die dazwischen liegende Sichtzone mit einem von der Vertikalen abweichenden Winkel schrägliegend angeordnet sind. Das zu mahlende Frischgut, z. B. Zementklinker, wird zusammen mit den Schülpen des Walzenpressenaustrages unmittelbar zur Guteintragsöffnung des Sichters geführt, die oben in dessen Sichtzone einmündet. Während das Gemisch aus Frischgut z. B. Zementklinker und von der Walzenpresse kommenden Schülpen durch Schwerkraft von oben nach unten über die kaskadenartig bzw. jalousieartig angeordneten Leitbleche wandert und dabei auch umgewälzt wird, wird insbesondere das Schülpenmaterial desagglomeriert, das dabei gleichzeitig etwa im Querstrom von der Sichtluft durchströmt wird, welche in der Lage ist, dabei das sowohl im Frischgut als auch im Schülpenmaterial enthaltene Feingut aus dem von oben nach unten durch den Sichter wandernden Gutmaterial herauszusichten, und nur die Sichtergrobgutfraktion, befreit von dem Feingutmaterial, wird dem Aufgabeschacht der Hochdruck-Walzenpresse zugeführt. Die Desagglomerierung des Schülpenmaterials kann dabei durch die wie Mahlkörper ebenfalls kaskadenartig nach unten fallenden Frischgutbrocken wirkungsvoll unterstützt werden. Ein eigener separat angetriebener Desagglomerator wie z. B. Prallhammermühle zur Desagglomerierung der Pressenschülpen vor deren Eintritt in den Sichter ist dabei überflüssig. Besteht das Frischgut aus Heißgut, z. B. aus glühend heißem nicht ausreichend gekühltem Zementklinker, so wird bei der erfindungsgemäßen Lösung dieses Heißgut im Kaskadensichter gleichzeitig auch gekühlt, was für den Betrieb der nachgeschalteten Hochdrück-Walzenpresse günstig ist. Denn es wäre schädlich, auf die Gutbettzerkleinerungs-Walzenpresse sehr heißes Material aufzugeben, was zu thermischer Überbeanspruchung wie Oberflächenverzug etc. der Pressenwalzen führen würde. Ist das Frischgut feucht, so daß es nicht ohne weiteres im Walzenspalt der Hochdruck-Walzenpresse gepreßt werden könnte, so besteht die Möglichkeit, den erfindungsgemäß vorgesehenen Kaskadensichter statt mit Luft mit Heißgas zu betreiben, durch welches das auf die Walzenpresse zu gebende Gutmaterial vorgetrocknet werden kann. Wird der Hochdruck-Walzenpresse nur die trockene Grobgutfraktion zugeführt, so ist ein ruhiger Lauf der Walzenpresse zu erwarten.

Die erfindungsgemäße Umlaufmahlanlage mit integrierter Hochdruck-Walzenpresse eröffnet auch die Möglichkeit, diese im Gegensatz zu bisherigen Betriebsweisen mit einem nicht zu hohen Preßdruck zu betreiben, um damit weniger harte Gutmaterialschülpen mit weniger scharfkantigen Partikeln zu erzeugen, wodurch der Verschleiß bei der Walzenpresse selbst sowie auch beim Sichter gemindert wird. Gleichzeitig wird durch eine nicht zu hohe Pressung des Mahlgutes eine breitere Kornverteilungskurve im Mahlprodukt erreicht, was bei vielen Produkten wie z. B. bei Zement erwünscht ist. Je weniger hart die aus der Hochdruck-Walzenpresse kommenden Schülpen sind, um so leichter lassen sie sich dann im erfindungsgemäßen Kaskadensichter desagglomerieren. Allerdings steigt bei einer weniger hohen Pressung der Schülpen die Umlaufmahlanlagen-Kreislaufrate, die aber vom erfindungsgemäßen Kaskadensichter ohne weiteres bewältigt werden kann. In jedem Fall wirkt der quer von Sichtluft durchströmte Kaskadensichter gleichzeitig als Desagglomerator für die Walzenpressenschülpen, d. h. die Desagglomerierung dieser Schülpen wird vom Kaskadensichter praktisch gratis miterledigt.

Die Vorabscheidung des Grobgutüberhanges in der von der Walzenpresse erzeugten Korngrößenverteilung ermöglicht auch den Einsatz eines nachgeschalteten Feinsichters für das Fertiggut, der mit niedrigerem Luftdurchsatz zu betreiben ist, wodurch dieser Feinsichter kleinere Baugrößen erlaubt.

Nach einem weiteren Merkmal der Erfindung kann die Austragsöffnung des Kaskadensichters zum Austrag der Mittelgut-/Feingutfraktion mit einer zweiten Kreislaufmahlanlage mit Rohrmühle und Sichter in Verbindung stehen, in welcher das Gut auf Fertiggutfeinheit gemahlen wird. Dabei können der Kaskadensichter des Mahlkreislaufes mit der Walzenpresse und der Sichter des angekoppelten Mahlkreislaufes mit der Rohrmühle zu einer kompakten Baueinheit zusammengefaßt sein. Während der Kaskadensichter in jedem Fall ein statischer Sichter ist, kann der Sichter des Mahlkreislaufes mit der Rohrmühle ein statischer oder auch ein dynamischer Sichter mit rotierendem Stabkorb sein.

Die Erfindung und deren weitere Merkmale und Vorteile werden anhand der in den Figuren schematisch dargestellten Ausführungsbeispiele näher erläutert.

Es zeigt:
- Fig. 1:: eine Ausführungsform der erfindungsgemäßen Umlaufmahlanlage mit erstem Mahlkreislauf mit Walzenpresse und Kaskadensichter und mit daran angekoppeltem zweiten Mahlkreislauf mit Rohrmühle und Sichter, und
- Fig. 2:: in detaillierterer Darstellung den Kaskadensichter der Fig. 1, der in diesem Falle mit einem statischen Nachsichter zu einer kompakten Baueinheit zusammengefaßt ist.

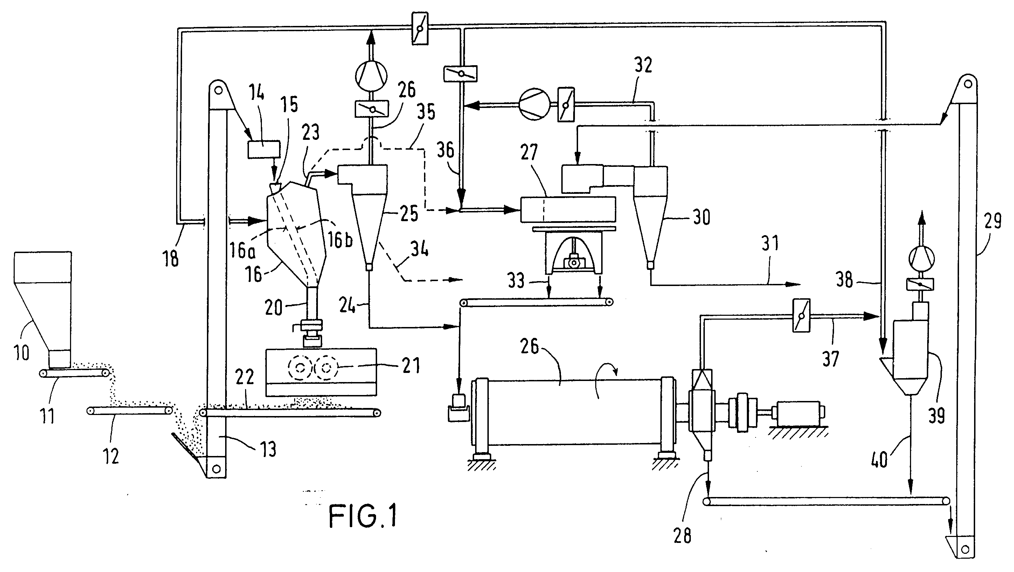

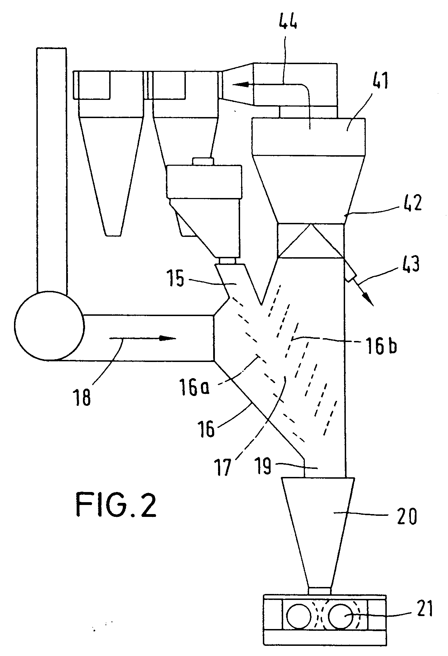

Bei der Umlaufmahlanlage der Fig. 1 wird Mahlgut wie z. B. Zementklinker aus einem Vorratsbunker (10) über Förderorgane (11, 12), Becherwerk (13) und Zuteilorgan (14) in die an der Oberseite befindliche Guteintragsöffnung (15) eines Kaskadensichters (16) eingeführt, der in Fig. 2 detaillierter dargestellt ist. Wie insbesondere auch aus Fig. 2 hervorgeht, ist der Kaskadensichter (16) ein statischer Sichter mit zwei vom schachtförmigen Sichtergehäuse umschlossenen und zwischen sich eine Sichtzone (17) bildenden sowie von Sichtluft (18) etwa im Querstrom durchströmten Sichtzonenbegrenzungswänden, die schräg nach unten in Richtung zur Austragsöffnung (19) für die ausgesichtete Grobgutfraktion (20) geneigte kaskadenartig bzw. jalousieartig angeordnete Leitbleche (16a und 16b) aufweisen, wobei diese beiden Leitblechwände und damit die dazwischen liegende Sichtzone (17) mit einem von der Vertikalen abweichenden Winkel schrägliegend angeordnet sind. Die vom Kaskadensichter (16) nach unten entlassene Grobgutfraktion (20) wird in den Aufgabeschacht einer Hochdruck-Gutbettzerkleinerungs-Walzenpresse (21) eingeführt, wobei die auf das Gut drückende Preßkraft der Walzen mehr als 2 t/cm Walzenlänge beträgt. Der Zementklinker tritt aus dem Walzenspalt zerkleinert und teilweise agglomeriert, d. h. zu Schülpen (22) verpreßt aus, deren Anteil an bereits bis zur gewünschten Zementfeinheit reduzierter Partikel bereits relativ hoch sein kann.

Damit sich die Schülpen (22) leichter auflösen lassen, sind sie in der Walzenpresse (21) mit einem nicht zu hohen Druck gepreßt worden. Jedenfalls werden die Schülpen (22) zusammen mit dem Frischgut (10) in die Guteintragsöffnung (15) des Kaskadensichters (16) eingeführt. Bei dem Fall bzw. beim Rutschen des Gutes über die Leitblechwand (16a) des Kaskadensichters (16) werden die Bruchstücke der Pressenschülpen (22) zerkleinert bzw. aufgelöst und auf diese Weise desagglomeriert, so daß der Kaskadensichter (16) wirkungsvoll als Schülpendesagglomerator wirkt. Verstärkt wird diese desagglomerierende Wirkung insbesondere, wenn auch das grobe Brocken enthaltende Frischgut (10) mit auf den Kaskadensichter (16) aufgegeben wird. Gleichzeitig wird im Kaskadensichter (16) etwa im Querstrom von der Sichtluft (18) aus dem Gutmaterial das Mittelgut/Feingut durch die Leitblechwand (16b) hindurch herausgesichtet und die Hochdruck-Walzenpresse (21) wird von diesem Gut entlastet, da nur die Grobgutfraktion (20) zur Walzenpresse rezirkuliert wird. Bei Einsatz des erfindungsgemäßen Kaskadensichters in Verbindung mit einer nicht zu hohen Pressung des Gutes in der Walzenpresse (21) ist der sonst bei der Gutbettzerkleinerung übliche separat betriebene Desagglomerator zur Auflösung der Walzenpressen-Schülpen nicht mehr notwendig.

Bei der Umlaufmahlanlage der Fig. 1 steht die Austragsöffnung (23) des Kaskadensichters (16) zum Austrag der Mittelgut-/Feingutfraktion (24) über einen Zyklonstaubabscheider (25), der diese Fraktion von der Sichtluft (26) abtrennt, mit einer zweiten Kreislaufmahlanlage mit Rohrmühle (26) und eigenem Sichter (27) in Verbindung, der im Ausführungsbeispiel ein dynamischer Sichter (Stabkorbsichter mit rotierendem Stabkorb) ist. Das Austragsgut (28) der Rohrmühle (26) wird dabei über Becherwerk (29) zum Sichter (27) geführt, in dessen nachgeschaltetem Abscheider (30) das Fertiggut (31) [Zement] von der Sichtluft (32) abgetrennt wird, die zusammen mit der Sichtluft (26) über Leitung (18) im Umluftbetrieb zum Kaskadensichter (16) rezirkuliert wird. Die Grieße (33) des Sichters (27) werden zum Guteintrag der Rohrmühle (26) rezirkuliert. Es besteht auch die Möglichkeit, bereits im Abscheider (25) eine Fertiggutfraktion (34) abzutrennen und nur die übrigbleibende Mittelgut-/Grobgutfraktion der Nachzerkleinerung zuzuführen. Weiterhin besteht die Möglichkeit, die mit der Mittelgut-/Feingutfraktion beladene Sichtluft (35) als Abluft des Kaskadensichters (16) direkt in die Zuluftleitung (36) zum Sichter (27) einzuleiten. Mit den Bauteilen (37, 38, 39, 40) ist noch die Mühlenentstaubung der Umlaufmahlanlage der Fig. 1 angezeigt.

Der Kaskadensichter (16) des Mahlkreislaufes mit der Walzenpresse (21) und der Sichter (27) des angekoppelten Mahlkreislaufes mit der Rohrmühle (26) können zu einer kompakten Baueinheit zusammengefaßt sein. In Fig. 2 ist noch zu sehen, daß am Kaskadensichter (16) als Vorsichter unmittelbar ein statischer Nachsichter (41) angeschlossen sein kann, wobei beide Sichter zu einer kompakten Baueinheit (42) zusammengefaßt sind. Während die abgetrennte Grobgutfraktion (20) unmittelbar dem Gutaufgabeschacht der Hochdruck-Walzenpresse (21) aufgegeben wird, kann die abgetrennte Mittelgutfraktion (43) in einen nachgeschalteten Rohrmühlenkreislauf zwecks Fertigmahlung eingeführt werden. Ist ein solcher nachgeschalteter Rohrmühlenkreislauf nicht vorhanden, kann die Mittelgutfraktion (43) ebenfalls zur Walzenpresse (21) rezirkuliert werden (Fertigmahlsystem nur mit Walzenpresse). Im statischen Nachsichter (41) wird das Fertiggut zusammen mit der Sichtluft (44) nach oben abgezogen, und die Sichtluft kann nach Abtrennung des Feingutes in den Kaskadensichter (16) rezirkuliert werden.

Dem Kaskadensichter (16) kann statt einer Rohrmühle (26) mit Vorteil eine sogenannte Sektional-Mühle nachgeschaltet sein, bei der um die Drehachse herum mehrere, z. B. vier sektional und parallel zur Drehachse liegende Mahlkörper aufweisende Mahlkammern angeordnet sind, die vom Mahlgut in Parallelströmen durchwandert werden. Eine solche Sektional-Mühle ist in der älteren Patentanmeldung P 43 03 987.1 beschrieben. Die effektive Begrenzung der maximalen Aufgabegutkorngröße durch den Kaskadensichter (16) kommt der vorwiegend reibenden Zerkleinerungswirkung (mit nur geringer Schlagwirkung) der Sektional-Mühle entgegen, wodurch in dieser eine effektive Zerkleinerung gewährleistet ist.

Der erfindungsgemäße Kaskadensichter (16) kann auch mit Heißgas betrieben werden und für sich genommen als Trockner zum Trocknen von feuchtem Aufgabegut verwendet werden.

## Patentansprüche

1. Umlaufmahlanlage zur Mahlung von Frischgut, mit einer Hochdruck-Walzenpresse (21) mit Gutbettzerkleinerung des Aufgabegutes und mit einem Sichter (16), dessen Grobgutaustragsöffnung (19) mit der Gutaufgabe der Walzenpresse in Verbindung steht, dadurch gekennzeichnet, daß die Anlage so gestaltet ist, daß das Frischgut zusammen mit den Schülpen des Walzenpressenaustrages unmittelbar zur Guteintragsöffnung (15) des Sichters geführt ist, der ein gleichzeitig als Desagglomerator wirkender statischer Kaskadensichter (16) ist mit zwei vom schachtförmigen Sichtergehäuse umschlossenen und zwischen sich eine Sichtzone (17) bildenden sowie von der Sichtluft im Querstrom durchströmten Sichtzonenbegrenzungswänden, die schräg nach unten in Richtung zur Austragsöffnung (19) für die ausgesichtete Grobgutfraktion (20) geneigte kaskadenartig bzw. jalousieartig angeordnete Leitbleche (16a, 16b) aufweisen, wobei die beiden Leitblechwände (16a, 16b) und damit die dazwischen liegende Sichtzone mit einem von der Vertikalen abweichenden Winkel schrägliegend angeordnet sind.

2. Umlaufmahlanlage nach Anspruch 1, dadurch gekennzeichnet, daß die Austragsöffnung (23) des Kaskadensichters (16) zum Austrag der Mittelgut/Feingutfraktion (24) mit einer zweiten Kreislaufmahlanlage mit Rohrmühle (26) und Sichter (27) in Verbindung steht.

3. Umlaufmahlanlage nach Anspruch 2, dadurch gekennzeichnet, daß der Kaskadensichter (16) des Mahlkreislaufes mit der Walzenpresse (21) und der Sichter (27) des angekoppelten Mahlkreislaufes mit der Rohrmühle (26) zu einer kompakten Baueinheit zusammengefaßt sind.

4. Umlaufmahlanlage nach den Ansprüchen 2 oder 3, dadurch gekennzeichnet, daß der Sichter (27) des Mahlkreislaufes mit der Rohrmühle (26) ein dynamischer oder ein statischer Sichter ist.

## Claims

1. A recirculating milling installation for the milling of raw material, with a high pressure roller press (21) with material bed crushing of the task material and with a sieve (16), whose coarse material opening (19) is in connection with the material output of the roller press, characterised in that the installation is arranged such that the raw material is taken directly to the material feed aperture (15) of the sieve with the agglomerated particles of the roller press, which is at the same time a static cascade sieve (16) working as a disagglomerator with two sieve zone bordering walls enclosed by the shaft shaped sieve housing, and forming a sieve zone (17) between them and the bordering walls of the sieve zone through which the sieving air flows, which has cascade like or venetian blind formed guide plates (16a, 16b) sloping downwards in the direction of the output opening (19) for the coarse material fraction (20) sieved out, whereby the two guide plates walls (16a, 16b) and thereby the sieve zone lying between them are arranged to be inclined at an angle deviating from the vertical.

2. A recirculating milling installation according to Claim 1, characterised in that the take-off opening (23) of the cascade sieve (16) is in connection with a second recirculating mill installation by the take-off for the middling/fine material fractions (24) with a tube mill (26) and sieve (27).

3. A recirculating milling installation according to Claim 2, characterised in that the cascade sieve (16) of the milling circulation with the roller press (21) and the sieve (27) of the coupled-on milling circulation with the tube mill (26), are assembled together into a compact building unit.

4. A recirculating milling installation according to Claims 1 or Claim 2, characterised in that the sieve (27) of the milling circle including the tube mill (26) is a dynamic or a static sieve.

## Revendications

1. Unité de broyage avec recyclage de produit brut, avec une presse à cylindres sous haute pression (21) avec broyage en lit de produit du produit initial et avec un séparateur (16) dont l'orifice de soutirage de produit grossier (19) est en communication avec l'arrivée de produit de la presse à cylindres,
caractérisé en ce que
l'unité est constituée de telle façon qu'on conduit le produit initial avec les écailles du soutirage de la presse à cylindres directement dans l'orifice d'entrée (15) du séparateur, qui est constitué simultanément comme séparateur en cascade (16) statique à effet de désagglomération, qui présente des tôles de guidage (16a, 16b) inclinées en cascade ou disposées comme un store à lamelles et forment entre elles une zone de séparation (17) qui sont entourées d'une enveloppe de séparateur à poussière en forme de puits, avec des parois délimitant la zone de séparation balayée en sens inverse par de l'air de séparation, ces tôles de guidage sont inclinées vers le bas dans le sens de l'orifice de soutirage (19) de la fraction grossière séparée (20) où les deux parois à tôles de guidage (16a, 16b) et avec elles la zone de séparation placée entre elles sont disposées obliquement en faisant un angle avec la verticale.

2. Unité de broyage avec recyclage selon la revendication 1,
caractérisée en ce que
l'orifice de sortie (23) du séparateur en cascade (16) pour soutirer la fraction de produit moyenne/fine (24) est en communication avec une deuxième unité de broyage avec recyclage au broyeur à boulets (26) et séparateur (27).

3. Unité de broyage avec recyclage selon la revendication 2,
caractérisée en ce que
le séparateur à cascade (16) du circuit de broyage avec recyclage est englobé en une unité constitutive compacte avec la presse à cylindres (21) et le séparateur (27) du circuit de broyage avec recyclage complet comprenant le broyeur à boulets (26).

4. Unité de broyage avec recyclage selon les revendications 2 ou 3,
caractérisée en ce que
le séparateur (27) du circuit de broyage avec recyclage comprenant le broyeur à boulets est un séparateur dynamique ou statique (26).
